# EUROPÄISCHE PATENTANMELDUNG

(11) **EP 3 511 582 A1**
(43) Veröffentlichungstag der Anmeldung: **17.07.2019**
(21) Anmeldenummer: 19000013.3
(22) Anmeldetag: 10.01.2019
(51) Int. Cl.: F16B 33/00

(54) **CARBONFASERSCHRAUBE**

(30) Priorität: 12.01.2018 DE 202018100151 U
(71) Anmelder: CTG Carbon Team Germany GmbH, 97837 Erlenbach - Marktheidenfeld (DE)
(72) Erfinder: Kreuzer, Markus, 97828 Marktheidenfeld (DE)
(74) Vertreter: Gleim, Christian Ragnar

(57) **Zusammenfassung**

Carbonfaserschraube 1 mit einem mindestens einen Gewindegang 21 umfassenden Außengewinde 2, wobei der mindestens eine Gewindegang 21 in seiner Längsrichtung eine in einem Matrixmaterial angeordnete Carbonfaser 211 umfasst.

## Beschreibung

Die vorliegende Erfindung betrifft eine Carbonfaserschraube gemäß dem unabhängigen Anspruch.

Die möglichen Einsatzgebiete einer Schraube sind durch die dabei an die Schraube gestellten Anforderungen im Wesentlichen durch ihre Materialeigenschaften und ihre Bauart vorgegeben. Anforderungen an eine Schraube umfassen beispielsweise eine hohe Festigkeit gegenüber äußeren Scherkräften und Drehmomenten, wie sie auf den Schraubkopf und den Schraubkern wirken. Zudem muss die Schraube auch eine hohe Festigkeit gegenüber Kräften aufweisen, welche aufgrund thermischer Einflüsse auf die Schraube wirken. Insbesondere schmale Strukturen, wie der Gewindegang einer Schraube, fordern aufgrund der dort auftretenden hohen Kräfte eine erhebliche Festigkeit.

Um eine derartige Festigkeit zu erzielen, sind konventionelle Schrauben typischerweise aus einem besonders hartem Material gefertigt. Konventionelle Schrauben bestehen beispielsweise aus legierten oder unlegierten Stählen, welche zum Beispiel in einem Kaltformungsprozess hergestellt werden können. Diese Art von metallischen Schrauben, welche aus einem einzigen Draht hergestellt werden können, besitzen eine hohe Materialfestigkeit.

Jedoch erfordert beispielsweise der Einsatz in der Medizin Schrauben aus nichtmetallischen Materialen. Zum Beispiel ist aus dem EP 1 715 198 B1 bekannt Schrauben aus Kunststoff herzustellen. Konventionelle Schrauben aus Kunststoff besitzen für viele Anwendungszwecke eine niedrigere Materialfestigkeit als Schrauben aus Metall.

Konventionelle Schrauben aus Kunststoff sind aufgrund der ungenügenden Materialfestigkeit des Kunststoffes nur für sehr begrenzte Einsatzzwecke verwendbar. Eine Möglichkeit die Festigkeit der Schraube aus Kunststoff zu erhöhen ist beispielsweise durch eine geeignete Bauart.

Konventionelle Schrauben sind ferner aus dem Stand der Technik aus der DE 2705336 A1, DE 102014103270 A1, US 9316244 B2 und EP 0399548A2 bekannt.

Es ist die Aufgabe der Erfindung eine Carbonfaserschraube bereitzustellen, die die aus dem Stand der Technik bekannten Nachteile überwindet sowie insbesondere eine hohe Festigkeit aufweist und für eine Vielzahl von Einsatzzwecken eingesetzt werden kann.

Dieses Problem wird durch eine Carbonfaserschraube entsprechend dem unabhängigen Anspruch gelöst. Vorteilhafte Ausführungsformen bilden den Gegenstand der jeweiligen Unteransprüche.

Die Erfindung umfasst eine Carbonfaserschraube mit einem mindestens einen Gewindegang umfassenden Außengewinde. Dabei umfasst der mindestens eine Gewindegang in seiner Längsrichtung eine in einem Matrixmaterial angeordnete Carbonfaser. Dabei ist die (einstückig und durchgehend ausgebildete) Carbonfaser vollständig (über die gesamte Länge) innerhalb des mindestens einen Gewindegangs angeordnet. Die mindestens eine Carbonfaser kann aus mehreren parallel geführten Carbonfasern oder miteinander verflochtenen Carbonfasern hergestellt sein und umfasst insbesondere Filamente. Aufgrund der Anordnung der Carbonfaser ergibt sich der Vorteil, dass eine Carbonschraube mit einer guten Festigkeit bereitgestellt wird. Bei den erfindungsgemäßen Carbonschrauben sind im Vergleich zu solchen ohne Carbonfaser im Gewindegang große Kräfte, vorallem in Achsrichtung der Schraube, aufnehmbar. Die Carbonfaser kann bevorzugt mittels Pultrusion oder Pullwinding - Verfahren in den Gewindegang eingebracht werden.

Nach einem bevorzugten Aspekt umfasst der mindestens eine Gewindegang über die gesamte Länge oder einen Abschnitt seiner Länge mehrere verwobene (Garne) oder nicht-verwobene (parallele Ausrichtung der Fasern) Carbonfasern. Die Carbonfasern besitzen dabei einen Durchmesser zwischen 1 µm und 1 mm.

Weiterhin vorteilhaft umfasst das Matrixmaterial einen Kunststoff, wie Polyetheretherketon, Polyphenylensulfid, Polysulfon, Polyetherimid oder Polytetrafluorethen.

Dabei ist es besonders bevorzugt, wenn der Kunststoff ein thermoplastisches Material umfasst. Eine Carbonfaserschraube aus mehreren Bestandteilen (Kern, Gewinde) lässt sich aus dem thermoplastischen Material durch verschmelzen (verschweißen) herstellen, indem die Bestandteile miteinander hohen Temperaturen ausgesetzt werden, z.B. in einem Ofen.

Es ist ferner besonders vorteilhaft, wenn die Carbonfaserschraube eine Gewindebuchse (hohlzylinderförmiges Element mit einem Innendurchmesser der etwa dem Außendurchmesser des Kernteils entspricht) und ein Kernteil (stabförmiges Element mit einem Außendurchmesser der etwa dem Innendurchmesser der Gewindebuchse entspricht) umfasst. Das Kernteil ist dabei axial in die Gewindebuchse einsteckbar bzw. einpressbar. Das Kernteil ist ganz oder teilweise innerhalb der Gewindebuchse angeordnet und das Außengewinde an der Außenseite der Gewindebuchse angeordnet. Die Gewindebuchse lässt sich durch ein Verfahren herstellen, indem auf eine Form (Zylinder) ein (flexibler) Schlauch aus einem Geflecht aus Matrixmaterial und Fasermaterial (Carbonfaser, Aramidfaser, Glasfaser, Naturfaser, Basaltfaser) aufgezogen und unter Temperatureinwirkung verschmolzen (konsolidiert) wird.

Bevorzugt ist zudem, wenn die Gewindebuchse über den gesamten oder einen Teil (mehr als 50%) ihrer Länge mindestens eine Carbonfaser umfasst. Die Carbonfaser kann sowohl in Richtung des Gewindegangs liegen, also auch (zusätzlich) in axialer Richtung der Gewindebuchse liegen. Auf diese Art und Weise nehmen die in der Gewindebuchse angeorndeten Carbonfasern beim Verschrauben auftretende Axialkräfte auf. Die Carbonfaser kann sich dabei über die Gewindebuchse hinaus in andere Teile der Schraube erstrecken.

Vorteilhafterweise umfasst die Gewindebuchse über die gesamte oder einen Teil ihrer Länge mehrere Carbonfasern. Mehrere Carbonfasern sind dabei miteinander verwoben oder nicht-verwoben. Die Carbonfasern können zu Garnen entsprechender Dicke verwoben (verflochten) sein. Die mehreren Carbonfasern liegen entlang des Umfangs gleichmäßig verteilt.

Ferner besonders bevorzugt ist, wenn die Gewindebuchse aus einem thermoplastischen Material ist. Dabei sind der Innenumfang der Gewindebuchse und der Außenumfang des Kernteils derart ausgebildet, dass das Kernteil und die Gewindebuchse entlang einer geschlossenen Fläche miteinander verschmolzen werden können. Der Innenumfang der Gewindebuchse ist dabei (etwas) größer als der Außenumfang des Kernteils, aber nur so groß, dass Gewindebuchse und Kernteil im ineinander angeordneten Zustand aneinander in Kontakt liegen. Die Fläche, entlang welcher die Gewindebuchse und das Kernteil miteinander verschmolzen werden, ist dabei (mindestens) ein Teil der Mantelfläche des Kernteils sowie der Innenfläche der Gewindebuchse.

Es ist ferner vorteilhaft, wenn die Carbonfaserschraube einen Schraubkopf umfasst. Dabei ist der Schraubkopf an dem Kernteil angeordnet. Der Schraubkopf ist dabei kegelförmig, zylinderförmig oder linsenförmig ausgebildet und umfasst einen runden oder beliebig vieleckig ausgebildeten Querschnitt.

In einer bevorzugten Ausführung umfasst der Schraubkopf ein Mitnahmeprofil in Form eines Innensechskantes. Dabei ist das Mitnahmeprofil eine sechskantförmige und zentral am Schraubkopf angeordnete Aussparung.

In einer weiterhin vorteilhaften Ausführung umfasst der Schraubkopf ein Mitnahmeprofil in Form eines Außensechskantes.

Im Folgenden wird die Erfindung anhand der in den beigefügten Zeichnungen dargestellten Beispiele näher erläutert.

Es zeigen:
- Fig. 1: eine schematische Darstellung einer Carbonfaserschraube; und
- Fig. 2: einen Längsschnitt durch das Außengewinde, die Gewindebuchse und das Kernteil; und
- Fig. 3: eine teilweise geschnittene Darstellung der Gewindebuchse; und
- Fig. 4: die Carbonfaserschraube in einer Explosionsdarstellung; und
- Fig. 5: eine teilweise quergeschnittene Ansicht durch das Außengewinde, die Gewindebuchse und das Kernteil; und
- Fig. 6a: eine Darstellung des Schraubkopfes mit einer ersten Ausführung des Mitnahmeprofils; und
- Fig. 6b: eine Darstellung des Schraubkopfes mit einer zweiten Ausführung des Mitnahmeprofils.

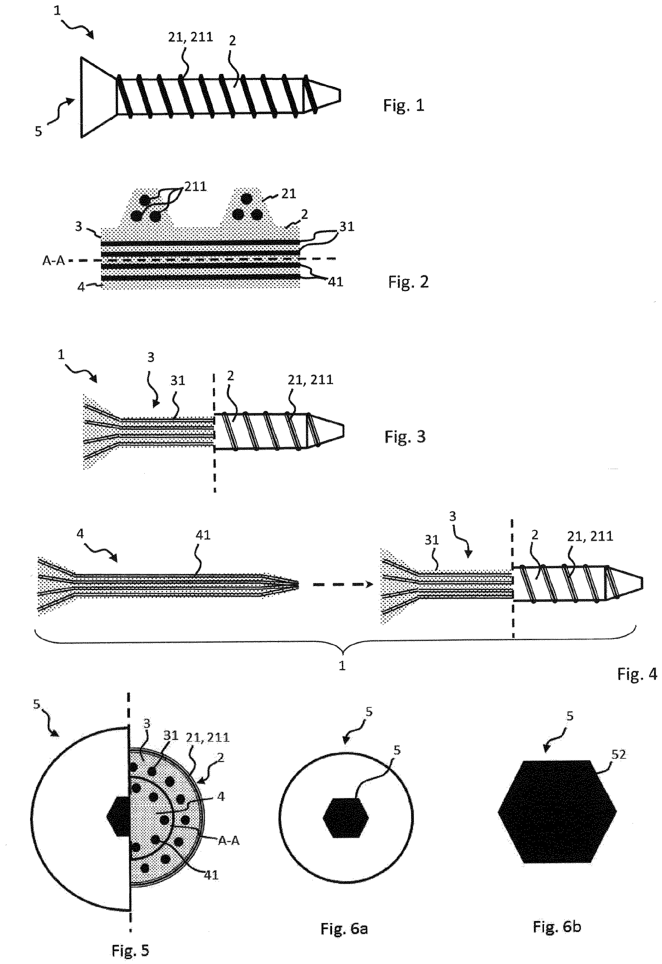

In **Fig. 1** ist eine Carbonfaserschraube 1 mit einem Außengewinde 2, welches Außengewinde 2 einen Gewindegang 21 umfasst, zeigt. Dabei umfasst der Gewindegang 21 in seiner Längsrichtung eine in einem Matrixmaterial angeordnete Carbonfaser 211. Die Carbonfaserschraube 1 umfasst einen Schraubkopf 5, welcher an dem Kernteil 4 angeordnet ist. Der Schraubkopf ist dabei kegelförmig ausgebildet und umfasst einen runden Querschnitt.

**Fig. 2** zeigt einen Längsschnitt durch das Außengewinde 2, die Gewindebuchse 3 und das Kernteil 4. Dabei umfasst das Außengewinde 2, welches an der Außenseite der Gewindebuchse 3 angeordnet ist, einen Gewindegang 21. Der Gewindegang 21 umfasst in seiner Längsrichtung mehrere in einem Matrixmaterial angeordnete, nicht-verwobene Carbonfasern 211. Das Matrixmaterial ist ein Kunststoff, welcher Kunststoff ein thermoplastisches Material umfasst.

Die Gewindebuchse 3 ist aus einem thermoplastischen Material und umfasst über einen Teil ihrer Länge mehrere Carbonfasern 31. Das Kernteil 4 ist teilweise innerhalb der Gewindebuchse 3 angeordnet und umfasst über einen Teil seiner Länge mehrere Carbonfasern 41. Der Innenumfang der Gewindebuchse 3 und der Außenumfang des Kernteils 4 sind derart ausgebildet, sodass das Kernteil 4 und die Gewindebuchse 3 entlang der geschlossenen Fläche A-A miteinander verschmolzen sind. Die Fläche A-A, entlang welcher die Gewindebuchse 3 und das Kernteil 4 miteinander verschmolzen sind, ist dabei ein Teil der Mantelfläche des Kernteils.

In **Fig. 3** ist eine teilweise geschnittene Darstellung der Gewindebuchse 3 gezeigt. Die Gewindebuchse 3, welche aus einem thermoplastischen Material ist, umfasst über den gesamten Teil ihrer Länge mehrere axial verlaufende Carbonfasern 31. Das Außengewinde 2, welches Außengewinde 2 einen Gewindegang 21 umfasst, ist an der Außenseite der Gewindebuchse 3 angeordnet. Der Gewindegang 21 umfasst in seiner Längsrichtung mehrere in einem Matrixmaterial angeordnete Carbonfasern 211.

**Fig. 4** zeigt die Carbonfaserschraube 1 in einer Explosionsdarstellung. Das Kernteil 4 ist ganz innerhalb der Gewindebuchse 3 angeordnet. Das Kernteil 4 ist dabei axial innerhalb der Gewindebuchse 3 angeordnet.

Die Gewindebuchse 3, welche aus einem thermoplastischen Material ist, umfasst über den gesamten Teil ihrer Länge mehrere axial verlaufende Carbonfasern 31. Das Außengewinde 2, welches Außengewinde 2 einen Gewindegang 21 umfasst, ist an der Außenseite der Gewindebuchse 3 angeordnet. Der Gewindegang 21 umfasst in seiner Längsrichtung mehrere in einem Matrixmaterial angeordnete Carbonfasern 211.

In **Fig. 5** ist eine teilweise quergeschnittene Ansicht durch das Außengewinde 2, die Gewindebuchse 3 und das Kernteil 4 gezeigt. Das Kernteil 4 ist ganz innerhalb der Gewindebuchse 3 angeordnet. Das Außengewinde 2, welches einen Gewindegang 21 umfasst, ist an der Außenseite der Gewindebuchse 3 angeordnet. Der Gewindegang 21 umfasst in seiner Längsrichtung mehrere in einem Matrixmaterial angeordnete Carbonfasern 211. Das Matrixmaterial umfasst einen Kunststoff, welcher Kunststoff ein thermoplastisches Material umfasst.

Die Gewindebuchse 3 ist aus einem thermoplastischen Material und umfasst über den gesamten Teil ihrer Länge mehrere Carbonfasern 31. Das Kernteil 4 ist ganz innerhalb der Gewindebuchse 3 angeordnet und umfasst über den gesamten Teil seiner Länge mehrere Carbonfasern 41. Der Innenumfang der Gewindebuchse 3 und der Außenumfang des Kernteils 4 sind derart ausgebildet, dass das Kernteil 4 und die Gewindebuchse 3 entlang einer geschlossenen Fläche A-A miteinander verschmolzen sind.

Die Carbonfaserschraube 1 umfasst einen Schraubkopf 5, welcher an dem Kernteil 4 angeordnet ist. Der Schraubkopf 5 ist dabei kegelförmig ausgebildet und umfasst einen runden Querschnitt. Der Schraubkopf 5 umfasst ein Mitnahmeprofil, welches in der Form eines Innensechskantes 51 ausgebildet ist. Dabei ist das Mitnahmeprofil eine sechskantförmige und zentral am Schraubkopf 5 angeordnete Aussparung.

**Fig. 6a und 6b** zeigen jeweils einen Schraubkopf 5, angeordnet an dem Kernteil 4 der Carbonfaserschraube 1, welcher Schraubkopf 5 ein Mitnahmeprofil in einer ersten 51 und einer zweiten 52 Ausführung umfasst.

Das Mitnahmeprofil in der ersten Ausführung in Fig. 6a ist in der Form eines Innensechskantes 51 ausgebildet. Dabei ist das Mitnahmeprofil eine sechskantförmige und zentral am Schraubkopf 5 angeordnete Aussparung.

Das Mitnahmeprofil in der zweiten Ausführung in Fig. 6b ist in der Form eines Außensechskantes 52 ausgebildet.

## Patentansprüche

1. Carbonfaserschraube (1) mit einem mindestens einen Gewindegang (21) umfassenden Außengewinde (2), wobei der mindestens eine Gewindegang (21) in seiner Längsrichtung eine in einem Matrixmaterial angeordnete Carbonfaser (211) umfasst.

2. Carbonfaserschraube (1) nach Anspruch 1, wobei der mindestens eine Gewindegang (21) über die gesamte Länge oder einen Abschnitt seiner Länge mehrere verwobene Carbonfasern (211) oder mehrere nicht-verwobene Carbonfasern (211) umfasst.

3. Carbonfaserschraube (1) nach einem der vorangehenden Ansprüche, wobei das Matrixmaterial einen Kunststoff umfasst.

4. Carbonfaserschraube (1) nach Anspruch 3, wobei der Kunststoff ein thermoplastisches Material umfasst.

5. Carbonfaserschraube (1) nach Anspruch 3 oder 4, wobei die Carbonfaserschraube (1) eine Gewindebuchse (3) und ein Kernteil (4) umfasst, welches Kernteil (4) ganz oder teilweise innerhalb der Gewindebuchse (3) angeordnet ist und wobei das Außengewinde (2) an der Außenseite der Gewindebuchse (3) angeordnet ist.

6. Carbonfaserschraube (1) nach Anspruch 5, wobei die Gewindebuchse (3) über den gesamten oder einen Teil ihrer Länge mindestens eine in einem Matrixmaterial angeordnete Carbonfaser (31) umfasst.

7. Carbonfaserschraube (1) nach Anspruch 5 oder 6, wobei die Gewindebuchse (3) über die gesamte oder einen Teil ihrer Länge mehrere Carbonfasern (31) umfasst.

8. Carbonfaserschraube (1) nach Anspruch 6 oder 7, wobei das Matrixmaterial der Gewindebuchse (3) ein thermoplastisches Material umfasst, und wobei der Innenumfang der Gewindebuchse (3) und der Außenumfang das Kernteils (4) derart ausgebildet sind, dass das Kernteil (4) und die Gewindebuchse (3) entlang einer geschlossenen Fläche (A-A) miteinander verschmolzen werden können.

9. Carbonfaserschraube (1) nach einem der Ansprüche 5 bis 8, ferner umfassend einen Schraubkopf (5), wobei der Schraubkopf (5) an dem Kernteil (4) angeordnet ist.

10. Carbonfaserschraube (1) nach Anspruch 9, wobei der Schraubkopf (5) ein Mitnahmeprofil (51, 52) umfasst.

11. Carbonfaserschraube (1) nach Anspruch 10, wobei das Mitnahmeprofil in Form eines Innensechskantes (51), Außensechskantes (52), Innensechsrund, Außensechsrund, Schlitzprofil oder Kreuzprofils ausgebildet ist.
